# DEMANDE DE BREVET EUROPEEN

(11) **EP 2 442 534 A1**
(43) Date de publication de la demande: **18.04.2012**
(21) Numéro de dépôt: 11184664.8
(22) Date de dépôt: 11.10.2011
(51) Int. Cl.: H04L 29/08, H04L 12/28

(54) **Découverte de services WEB dans un réseau local**

(30) Priorité: 14.10.2010 FR 1058375
(71) Demandeur: FRANCE TELECOM, 75015 Paris (FR)
(72) Inventeur: Marchand, Hervé, 35770 VERN SUR SEICHE (FR); Roul, Guillaume, 35530 NOYAL SUR VILAINE (FR); Le Coz, Fabrice, 35200 RENNES (FR)

(57) **Abrégé**

L'invention concerne la découverte d'un service Web proposé par un premier terminal (TD2) situé dans un réseau local (RL), à partir d'un second terminal (TD3) situé dans ledit réseau local et comprenant des moyens (NAV) de navigation sur ledit réseau local qui sont adaptés pour accéder à un serveur Web (SERV) dédié au premier terminal et connu du second terminal.

Selon l'invention, • au niveau desdits moyens de navigation du second terminal : - chargement, puis exécution (E5) d'une page Web (PW) contenant une application Web (APR) de recherche du service Web à découvrir, suite à l'envoi d'une requête (REQ) d'accès auprès dudit serveur Web, -envoi (E6), via le réseau local, à destination du premier terminal et d'autres terminaux (TD1, TD4) susceptibles d'être présents dans le réseau local, d'une requête (REQ') contenant des données d'identification du service Web à découvrir, • au niveau du premier terminal (TD2): - réception (E7) de ladite requête, détermination (E8) de la correspondance entre les données d'identification du service Web contenues dans la requête reçue et des données d'identification dudit service Web proposé, envoi (E9) au second terminal d'une réponse (REP') à la requête reçue, ladite réponse comprenant au moins une adresse de connexion au service Web proposé, • à nouveau au niveau des moyens (NAV) de navigation du second terminal, réception (E10) de la réponse à ladite requête, redirection (E11) à l'adresse de connexion contenue dans la réponse reçue.

## Description

### Domaine de l'invention

Le domaine de l'invention se rapporte au domaine des réseaux de télécommunication, et plus particulièrement aux réseaux permettant l'interopérabilité et l'interconnexion des terminaux présents dans ce réseau, sans configuration par l'utilisateur.

Il peut s'agir par exemple d'un réseau local (LAN ou Local Area Network), qui peut être de type domestique (en anglais "home network") ou d'entreprise.

De façon plus particulière, l'invention concerne la découverte d'un service Web proposé par un terminal du réseau local, à l'initiative d'un autre terminal de ce réseau local.

### Arrière-plan de l'invention

Actuellement, une pluralité de services Web sont proposés dans le réseau local. Un service Web est proposé par un terminal du réseau local, via un serveur Web dédié. Des exemples de service Web consistent à permettre, à l'initiative d'un autre terminal du réseau local :
- le stockage de données sur le terminal proposant le service,
- une configuration particulière du terminal proposant le service (installation d'une connexion Internet par exemple),
- un contrôle à distance du terminal proposant le service (programmation d'un enregistrement sur un décodeur TV, par exemple).

Un terminal du réseau local qui souhaite utiliser le service Web précité doit se connecter préalablement au serveur Web dédié à l'aide de son navigateur. A cet effet, une adresse Web du serveur Web dédié est communiquée préalablement au terminal. Une fois que le terminal s'est connecté au serveur Web dédié, l'utilisateur du terminal doit saisir l'adresse IP (« Protocol Internet ») du terminal propsant le service Web.

Cette dernière opération est délicate pour plusieurs raisons. Premièrement, lorsque l'utilisateur connait ladite adresse IP, l'opération de saisie de cette adresse IP est fastidieuse pour l'utilisateur, et le risque d'erreur de saisie est loin d'être négligeable. Deuxièmement, lorsque l'utilisateur ne connait pas l'adresse IP, il peut avoir des difficultés à l'obtenir, cette dernière changeant régulièrement au cours du temps.

Pour pallier à cet inconvénient, des solutions techniques de découverte de services Web, sans configuration préalable par l'utilisateur, se sont développées au cours de ces dernières années. Elles sont basées sur des protocoles standards de découverte de service Web, tels que par exemple UPnP (abréviation anglaise de « Universal Plug and Play ») défini par l'UPnP Forum et le Consortium DLNA, UDDI (abréviation anglaise de «Universal Description Discovery and Integration »), ou encore « Bonjour » proposé par la société Apple. Cependant, les protocoles du type précité imposent d'installer sur les terminaux susceptibles de requérir de tels services Web un logiciel intégrant un au moins de ces protocoles.

Le document WO 2006/090243 divulgue un procédé de découverte de services Web, dans un réseau local, qui ne nécessite pas l'utilisation de protocoles de découverte propriétaires tels que ceux visés ci-dessus. A cet effet, un logiciel expert est préalablement installé dans la passerelle présente dans le réseau local, qui est destinée, de façon connue en soi, à interconnecter le réseau local et un réseau opérateur, par exemple du type IP via un réseau d'accès à support filaire ou radio. Le logiciel expert précité est chargé de rechercher en permanence les services Web dans le réseau local, en envoyant des requêtes de découverte vers les adresses IP associées respectivement aux terminaux présents dans le réseau local. Une fois que le logiciel expert a reçu les réponses envoyées par ces terminaux, il génére une page Web accessible par un terminal du réseau local requérant un service Web. Une telle page Web contient une liste d'adresses de connexion telles que par exemple des liens URL (abréviation anglaise de « Uniform Resource Locator ») correspondant respectivement aux services Web découverts. Lorsqu'un utilisateur souhaite accéder à un service Web proposé par un terminal du réseau local, il se connecte à la passerelle précitée, au moyen d'un autre terminal du réseau local requérant le service Web, de façon à accéder à la page Web générée par la passerelle. L'utilisateur n'a alors plus qu'à sélectionner le lien URL correspondant au service Web qui l'intéresse. Le navigateur du terminal requérant est ainsi redirigé vers le service Web concerné.

Un inconvénient d'un tel procédé réside dans le fait qu'il est nécessaire de développer un logiciel spécifique et d'installer ce dernier dans la passerelle. Non seulement un tel logiciel peut être coûteux à développer et à mettre à jour, mais aussi entraîner un mauvais fonctionnement ou un ralentissement de la passerelle, une partie non négligeable des ressources de cette dernière devant être consommée pour permettre la découverte de services Web.

Un autre inconvénient réside dans le fait que tous les services Web susceptibles d'être proposés dans le réseau local sont recherchés en permanence par la passerelle. Une telle disposition entraîne une consommation excessive des ressources de la passerelle et un encombrement inutile du réseau local.

Enfin, avec le procédé de découverte précité, l'utilisateur est obligé d'effectuer plusieurs opérations, c'est-à-dire d'abord accéder à la page Web générée par le système expert, puis cliquer sur le lien correspondant au service Web recherché. L'accès au service Web recherché n'est donc pas optimisé. Cela est d'autant plus vrai dans le cas où la page Web contient de nombreux liens URL, l'utilisateur pouvant avoir des difficultés à distinguer dans la page le lien URL correspondant effectivement au service Web qu'il recherche.

### Objet et résumé de l'invention

Un des buts de l'invention est de remédier à des inconvénients de l'état de la technique précité.

A cet effet, selon un premier aspect, la présente invention concerne un procédé de découverte d'un service Web proposé par un premier terminal situé dans un réseau local, à partir d'un second terminal situé dans le réseau local précité et comprenant des moyens de navigation sur le réseau local qui sont adaptés pour accéder à un serveur Web dédié au premier terminal et connu du second terminal.

Un tel procédé est remarquable en ce qu'il comprend les étapes suivantes :
- au niveau des moyens de navigation du second terminal :
   - chargement, puis exécution d'une page Web contenant une application Web de recherche du service Web à découvrir, suite à l'envoi d'une requête d'accès auprès du serveur Web dédié,
   - envoi, via le réseau local, à destination du premier terminal et d'autres terminaux susceptibles d'être présents dans le réseau local, d'une requête contenant des données d'identification du service Web à découvrir,
- au niveau du premier terminal:
   - réception de la requête,
   - détermination de la correspondance entre les données d'identification du service Web contenues dans la requête reçue et des données d'identification du service Web proposé,
   - envoi au second terminal d'une réponse à la requête reçue, la réponse comprenant au moins une adresse de connexion au service Web proposé,
- à nouveau au niveau des moyens de navigation du second terminal:
   - réception de la réponse à la requête,
   - redirection à l'adresse de connexion contenue dans la réponse reçue.

Une telle disposition permet ainsi d'effectuer simplement et rapidement l'accès à un service Web recherché. L'utilisateur se contente maintenant d'effectuer une seule opération pour découvrir un service Web dans le réseau local, à savoir, classiquement, la connexion au serveur Web dédié au terminal proposant le service Web recherché. Grâce à l'application Web contenue dans la page Web chargée par le terminal requérant lors de la connexion précitée, la recherche de l'adresse IP du terminal proposant le service Web et la redirection vers l'adresse de connexion du service Web recherché sont effectuées automatiquement, de façon complètement transparente pour l'utilisateur.

En outre, une telle procédure de découverte n'entraîne aucune modification, matérielle ou logicielle, des terminaux présents dans le réseau local, et en particulier de la passerelle qui s'y trouve. Quand bien même le serveur Web dédié au terminal proposant le service Web recherché serait installé dans la passerelle, cette dernière ne nécessiterait qu'un emplacement mémoire de taille réduite pour stocker la page Web selon l'invention.

Enfin, une telle disposition permet une recherche ciblée de service Web, c'est-à-dire un service Web particulier, tel que celui contenu précisément dans l'application Web incluse dans la page Web qui est chargée par le navigateur du terminal requérant le service Web, et cela uniquement au moment où ce dernier en fait la demande. L'encombrement du réseau local s'en trouve ainsi grandement réduit.

Dans un mode de réalisation, l'application Web précitée est dans un langage interprétable par les moyens de navigation du second terminal.

Une telle disposition permet ainsi d'utiliser les capacités « standard » du navigateur Internet dont est doté le terminal requérant le service Web, pour effectuer la découverte de celui-ci. L'application Web de recherche de services Web contenue dans la page Web qui est chargée par le terminal requérant le service Web est récupérée naturellement par le navigateur de ce dernier puis exécutée par ce navigateur. Aucune modification matérielle ou logicielle du terminal requérant le service Web n'est donc nécessaire à cette fin.

En particulier, le langage de l'application Web précitée est du type JavaScript, ce type de langage étant le plus couramment utilisé actuellement par les navigateurs Internet.

Dans un autre mode de réalisation, l'application Web contient une plage d'adresses IP associées respectivement au premier terminal et aux autres terminaux du réseau local.

Une telle disposition permet ainsi à l'utilisateur de ne pas avoir à connaitre ou chercher au préalable les adresses IP associées respectivement aux terminaux présents dans son réseau local. De telles adresses sont en effet préalablement écrites dans le code de l'application Web de recherche de services Web. Ainsi, à l'exécution de l'application Web par le navigateur du terminal requérant un service Web particulier, le navigateur déclenche automatiquement l'envoi de requêtes de découverte de service vers toutes les adresses IP contenues dans l'application Web.

Dans encore un autre mode de réalisation, l'étape d'envoi de la requête précitée à destination du premier terminal et des autres terminaux est effectuée de façon asynchrone.

Une telle disposition permet de réduire de façon importance les temps de latence qui sont engendrés entre l'envoi d'une requête de recherche de service Web à destination du premier terminal et des autres terminaux du réseau local et la réception, dans le navigateur du second terminal, de la réponse à cette dernière. L'accès au service Web recherché est ainsi rendu plus rapide.

Dans encore un autre mode de réalisation, la réponse contenant l'adresse de connexion au service Web proposé comprend en outre des informations complémentaires sur le service Web proposé.

Une telle disposition permet une redirection plus précise et plus ciblée, par le navigateur du terminal ayant requis le service Web, vers l'adresse Web du service Web recherché. De telles informations complémentaires consistent par exemple dans le nom du service Web recherché, sa version la plus à jour, etc....

Corrélativement, selon un second aspect, la présente invention concerne un système de découverte d'un service Web, comprenant :
- un premier terminal situé dans un réseau local et apte à proposer le service Web,
- un second terminal apte à requérir le service Web proposé auprès du premier terminal, le second terminal étant situé dans le réseau local précité et comprenant des moyens de navigation sur le réseau local qui sont adaptés pour accéder à un serveur Web dédié au premier terminal et connu du second terminal.

Le système selon l'invention est remarquable en ce que :
- les moyens de navigation du second terminal sont adaptés pour :
   - charger une page Web contenant une application Web de recherche du service Web à découvrir, en réponse à une requête d'accès auprès du serveur Web dédié,
   - exécuter l'application Web,
   - envoyer, via le réseau local, à destination du premier terminal et d'autres terminaux susceptibles d'être présents dans le réseau local, une requête contenant des données d'identification du service Web à découvrir,
- en ce que le premier terminal comprend :
   - des moyens de réception de la requête envoyée,
   - des moyens de détermination de la correspondance entre les données d'identification du service Web contenues dans la requête reçue et des données d'identification du service Web proposé,
   - des moyens d'envoi au second terminal d'une réponse à la requête reçue, la réponse précitée comprenant au moins une adresse de connexion au service Web proposé,
- les moyens de navigation du second terminal étant en outre adaptés pour :
   - recevoir la réponse envoyée,
   - se rediriger à l'adresse de connexion contenue dans la réponse reçue.

Corrélativement, selon un troisième aspect, la présente invention concerne un serveur Web dédié à un terminal qui est situé dans un réseau local et qui est apte à proposer un service Web à un terminal requérant situé dans ledit réseau local et comprenant des moyens de navigation sur le réseau local qui sont adaptés pour accéder au serveur Web dédié, un tel serveur comprenant des moyens d'envoi d'une page Web au terminal requérant, en réponse à une requête d'accès par les moyens de navigation de ce dernier auprès du serveur Web précité.

Un tel serveur est remarquable en ce que la page Web envoyée contient une application Web de recherche du service Web à découvrir, l'application Web précitée étant destinée à être exécutée par les moyens de navigation du terminal requérant afin d'envoyer, via le réseau local, à destination du terminal proposant le service Web et d'autres terminaux susceptibles d'être présents dans le réseau local, une requête contenant des données d'identification du service Web à découvrir.

Dans un mode de réalisation, l'application Web précitée est dans un langage interprétable par les moyens de navigation du terminal requérant le service Web.

Plus particulièrement, le langage de l'application Web est du type JavaScript.

Dans encore un autre mode de réalisation, l'application Web contient une plage d'adresses IP associées respectivement au terminal requérant le service Web et aux autres terminaux du réseau local.

Corrélativement, selon un quatrième aspect, la présente invention concerne un terminal situé dans un réseau local et apte à requérir un service Web proposé par un autre terminal situé dans ce même réseau local, le terminal requérant comprenant des moyens de navigation sur le réseau local qui sont adaptés pour accéder à un serveur Web dédié à l'autre terminal et connu du terminal requérant.

Un tel terminal requérant est remarquable en ce que les moyens de navigation de ce dernier sont adaptés pour :
- charger une page Web contenant une application Web de recherche du service Web à découvrir, en réponse à une requête d'accès auprès du serveur Web dédié,
- exécuter ladite application Web,
- envoyer, via le réseau local, à destination du terminal proposant le service Web et d'autres terminaux susceptibles d'être présents dans le réseau local, une requête contenant des données d'identification du service Web à découvrir,
- recevoir, en provenance du terminal proposant le service Web et ayant déterminé la correspondance entre les données d'identification du service Web contenues dans la requête envoyée et des données d'identification du service Web proposé, une réponse comprenant au moins une adresse de connexion au service Web proposé,
- se rediriger à l'adresse de connexion contenue dans la réponse reçue.

Corrélativement, selon un cinquième aspect, la présente invention concerne un terminal situé dans un réseau local et apte à proposer un service Web à un terminal requérant situé dans ce même réseau local et comprenant des moyens de navigation sur le réseau local, le terminal proposant le service Web ayant un serveur Web dédié qui est connu du terminal requérant et qui est accessible par les moyens de navigation de ce dernier.

Un tel terminal proposant le service Web précité est remarquable en en ce qu'il comprend :
- des moyens de réception, en provenance du terminal requérant, d'une requête contenant des données d'identification du service Web à découvrir qui ont été obtenues après exécution, par les moyens de navigation du terminal requérant, d'une application Web de recherche du service Web à découvrir qui a été extraite préalablement d'une page Web chargée par lesdits moyens de navigation en réponse à une requête d'accès par ces derniers auprès du serveur Web dédié,
- des moyens d'envoi au terminal requérant d'une réponse à la requête reçue, la réponse précitée comprenant au moins une adresse de connexion au service Web proposé.

L'invention vise également un programme d'ordinateur comportant des instructions pour l'exécution des étapes du procédé de découverte d'un service Web mentionné ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, un tel support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Le dispositif et le programme d'ordinateur précités présentent au moins les mêmes avantages que ceux conférés par le procédé selon la présente invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une représentation de l'architecture générale dans laquelle est mis en oeuvre le procédé de découverte d'un service Web, selon un mode de réalisation de l'invention;
- la figure 2 est une représentation schématique du terminal requérant le service Web à découvrir ;
- la figure 3 est une représentation schématique du terminal proposant le service Web à découvrir ;
- la figure 4 est une représentation schématique du serveur Web dédié au terminal proposant le service web à découvrir ;
- la figure 5 représente un ordinogramme du procédé de découverte d'un service Web conforme à l'invention.

### Description détaillée d'un mode de réalisation

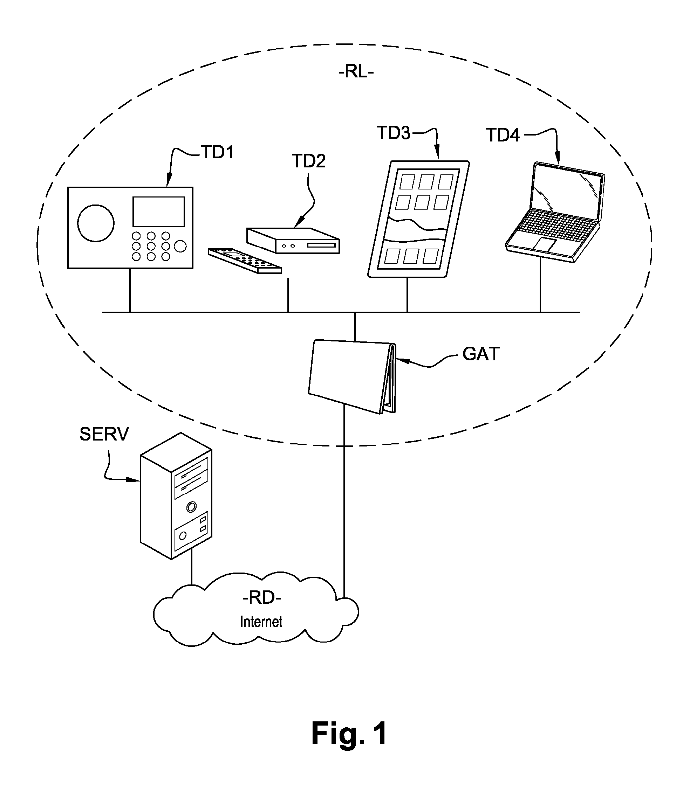

La **figure** 1 représente de façon générale, selon un mode de réalisation, le système de découverte de service Web, dans lequel est mis en oeuvre le procédé de découverte de service Web selon l'invention.

Selon l'invention et conformément à l'exemple représenté sur la **figure 1**, le système de découverte de service Web comprend :
- un ou plusieurs terminaux domestiques TD1,..., TDn adaptés à recevoir des données au format IP, lesdites terminaux étant situés dans un réseau local RL,
- un serveur Web SERV qui est dédié à au moins un des terminaux TD1,...,TDn susceptibles de proposer un service Web dans le réseau local RL,
- un dispositif d'interconnexion GAT apte à interconnecter le le réseau local RL avec un réseau de communication distant RD, par exemple de type Internet.

Dans l'exemple représenté, le serveur Web SERV est situé à l'extérieur du réseau local RL. Bien entendu, en variante, le serveur Web SERV pourrait être situé dans le réseau local RL. De façon plus précise, le serveur SERV pourrait être installé dans le dispositif d'interconnexion GAT.

Dans l'exemple représenté sur la **figure 1**, les terminaux domestiques TD1,..., TDn sont au nombre de quatre. Il s'agit en particulier :
- d'un récepteur radio Internet, noté TD1,
- d'un décodeur numérique TV de type Set-Top-Box, noté TD2,
- d'une tablette électronique, notée TD3,
- d'un ordinateur portable, noté TD4.

Dans l'exemple représenté, le réseau local RL est par exemple un réseau Ethernet mettant en oeuvre le protocole de liaison sans fil WiFi.

Le réseau local RL peut être aussi bien un réseau domestique qu'un réseau local d'entreprise, constitué partiellement ou totalement de segments sans fil.

Dans l'exemple représenté, le réseau local RL est de type domestique et le dispositif d'interconnexion GAT est à ce titre une passerelle domestique.

Au moins un des terminaux domestiques précités, par exemple, le décodeur numérique TV TD2, est apte à proposer un service Web dans le réseau local RL.

Un tel service Web consiste par exemple en une prise de contrôle à distance du décodeur TV TD2 pour notamment effectuer un changement de chaînes, programmer un enregistrement particulier, etc....

A cet effet, le serveur Web SERV est dédié au terminal TD2 pour rendre ce service.

Au moins un autre terminal domestique du réseau local est quant à lui apte à requérir un tel service Web auprès du terminal TD2. On suppose dans l'exemple représenté qu'il s'agit de la tablette électronique TD3.

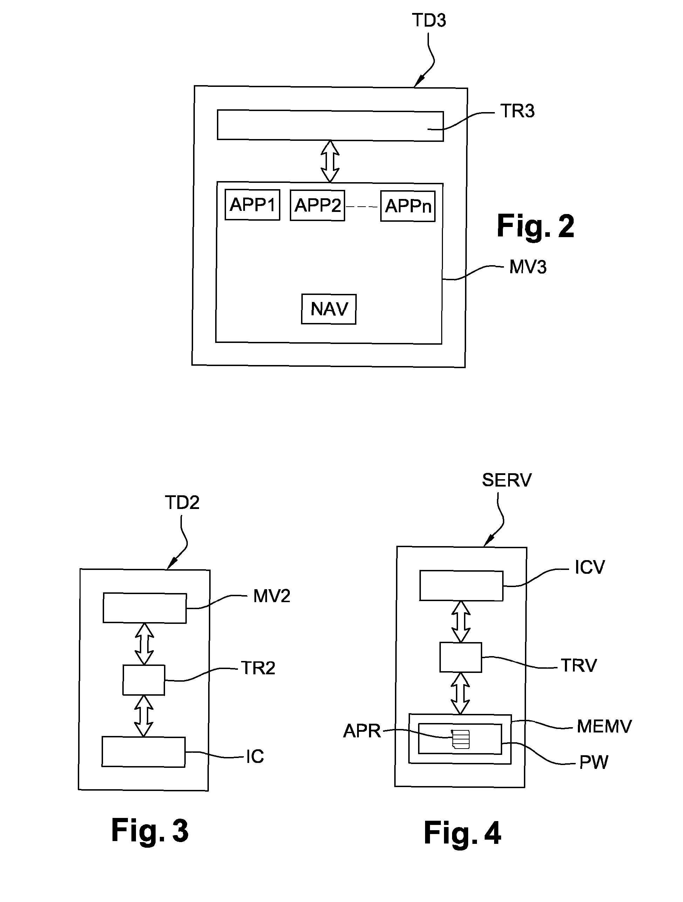

A cet effet, en référence à la **figure 2**, le terminal TD3 comprend :
- un support d'enregistrement lisible par un ordinateur, tel que par exemple une mémoire vive MV3,
- une pluralité d'applications APP1, APP2,..., APPn stockées dans la mémoire vive MV3,
- un navigateur Web NAV stocké dans la mémoire vive MV3 et adapté pour accéder au serveur Web dédié SERV, via le réseau local RL.

Le navigateur NAV consiste dans n'importe quel type de navigateur disponible dans le commerce.

Plus particulièrement dans l'exemple représenté, le navigateur fonctionne dans le langage javascript, qui est le principal langage de script côté client, et utilise le protocole de communication HTTP.

Le terminal TD3 comprend en outre un module de traitement TR3 qui est destiné notamment à, d'une part, exécuter l'une et/ou l'autre des applications APP1,...,APPn et, d'autre part commander le fonctionnement du navigateur NAV. Ledit module de traitement est un logiciel qui est stocké dans une mémoire morte (non représentée) du terminal TD3.

Le terminal TD2 proposant le service Web à découvrir est représenté sur la **figure 3****.**

Dans l'exemple représenté, le terminal TD2 comprend une interface de communication IC qui est destinée à dialoguer, selon un protocole de communication déterminé, avec les autres terminaux du réseau local, aussi bien les terminaux domestiques TD1, TD3 et TD4, que la passerelle GAT. Dans l'exemple repésenté, le protocole de communication est de type Wi-Fi.

Le terminal TD2 comprend en outre un module de traitement TR2 qui est destiné notamment à commander l'interface de communication IC, d'une part à la réception, dans le but de recevoir, en provenance du terminal TD3, une requête contenant des données d'identification du service Web à découvrir, et d'autre part à l'émission, afin d'envoyer au terminal TD2 ayant requis le service Web, une réponse comprenant au moins une adresse de connexion au service Web proposé. Ledit module de traitement est un logiciel qui est stocké dans une mémoire morte (non représentée) du terminal TD2.

Le terminal TD2 comprend en outre une mémoire vive MV2 apte à être commandée par le module de traitement TR2 et dans laquelle sont stockées les données d'identification du service Web précité. De telles données consistent par exemple dans le nom du service, sa version courante, le chemin de navigation jusqu'à la page Web dudit service (ex : URL), etc.... De telles données sont par exemple au format XML, RESTful, JSON ou similaires.

Bien entendu, une partie des autres terminaux TD1, TD3 et TD4 du réseau local RL, ou l'ensemble d'entre eux, sont chacun aptes également à proposer un ou plusieurs services Web, au même titre que le terminal TD2. A cet effet, de tels terminaux ont une architecture interne analogue (non représentée) à celle qui vient d'être décrite en référence à la **figure 3****.**

Plus particulièrement dans l'exemple représenté sur la **figure 1****,** on considère que chaque terminal TD1, TD3 et TD4 est apte à proposer un ou plusieurs services Web.

Le serveur Web dédié SERV est représenté sur la **figure 4**. Il comprend une mémoire vive MEMV qui contient une page Web PW de configuration du terminal TD2. Une telle page Web est accessible par n'importe quel terminal disposant d'un navigateur, en particulier le terminal TD3 à l'aide du navigateur NAV. Une telle page Web est rendue accessible via un nom d'URL qui est prédéterminé et qui est accessible à l'utilisateur du terminal TD2. Dans l'exemple représenté, le nom d'URL est http://www.TD2.fr.

Selon l'invention, ladite page Web PW contient une application Web dédiée spécifiquement à la recherche du service Web à découvrir dans le réseau local RL. Un telle application est notée APR sur la **figure 4****.** Cette application Web est dans un langage interprétable par le navigateur NAV du terminal TD3, à savoir en Javascript dans l'exemple représenté.

La particularité de cette application Web est qu'elle contient les adresses IP associées respectivement aux terminaux TD1, TD2, TD3 et TD4 dans le réseau local. De telles adresses ont un format standard et s'écrivent de la façon suivante 192.168.1.xxx. Elles sont attribuées dynamiquement par le serveur DHCP (abréviation anglaise de « Dynamic Host Configuration Protocol ») de la passerelle GAT. De façon connue en tant que telle, la plage d'adresses précitée peut s'étendre de l'adresse 192.168.1.1 à l'adresse 192.168.1.255. Ainsi, l'application Web APR contient cette plage d'adresses, parmi lesquelles figurent obligatoirement les quatre adresses associées respectivement aux terminaux TD1, TD2, TD3 et TD4, 192.168.1.1, 192.168.1.2, 192.168.1.3, et 192.168.1.4.

Conformément à l'invention, ladite application Web APR contient également en langage javascript les données d'identification du service Web dédié au terminal TD2, telles que par exemple le nom du service, sa version, le chemin de navigation jusqu'à la page Web dudit service (ex : URL), etc...

Le serveur Web SERV comprend en outre une interface de communication ICV qui est destinée à dialoguer, selon un protocole de communication déterminé, avec les terminaux domestiques TD1, TD2, TD3 et TD4, via la passerelle GAT. Dans l'exemple repésenté, le protocole de communication est de type http.

Le serveur Web SERV comprend en outre un module de traitement TRV qui est destiné notamment à commander l'interface de communication ICV de façon à ce que cette dernière envoie la page Web PW au terminal TD3 requérant le service Web, en réponse à une requête d'accès par le navigateur NAV de ce dernier auprès du serveur Web SERV.

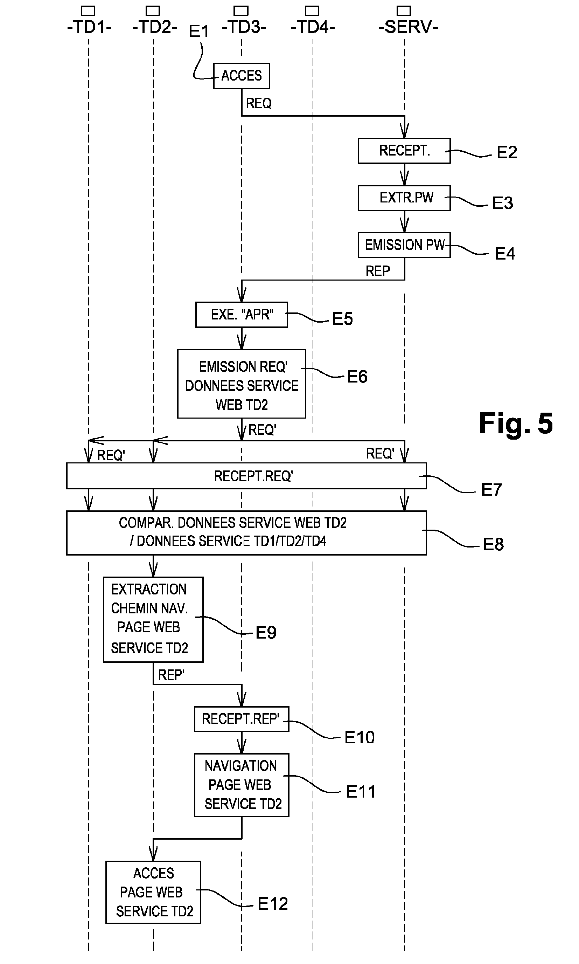

En référence maintenant à la **figure 5**, on va décrire le procédé de découverte de service Web selon l'invention.

Conformément à l'exemple représenté, supposons que le terminal TD2 propose un service Web intitulé par exemple « mon-pilotage-a-distance » et que le terminal TD3 souhaite accéder à ce service Web, sans connaître au préalable l'adresse IP du terminal TD2 dans le réseau local RL.

Au cours d'une étape E1, le navigateur NAV du terminal TD3 envoie une requête d'accès REQ au serveur Web dédié SERV, à son adresse publique http://www.TD2.fr.

Au cours d'une étape E2, l'interface de communication ICV du serveur SERV reçoit ladite requête.

Au cours d'une étape E3, le module de traitement TRV du servuer SERV extrait la page Web PW de la mémoire vive MEMV et la transmet à l'interface de communication ICV.

Au cours d'une étape E4, l'interface de communication ICV envoie en réponse au navigateur NAV une réponse REP contenant la page Web PW extraite.

Dans l'exemple représenté, la réponse REP est au format JSON, c'est-à-dire écrite en langage HTML/JAVA Script classique.

Au cours d'une étape E5, le navigateur NAV du terminal TD3 charge la page Web PW contenue dans la réponse REP reçue, ce qui a pour effet d'activer l'exécution de l'application Web APR de recherche de service Web.

Au cours d'une étape E6, le module de traitement TR3 du terminal TD3 commande le navigateur NAV pour que ce dernier envoie une requête REQ' dans le réseau local RL vers toutes les adresses IP de la plage d'adresses 192.168.1.1 à 192.168.1.255 qui est contenue dans l'application Web APR. Dans l'exemple représenté, seuls les terminaux TD1, TD2 et TD4 sont susceptibles de répondre à une telle requête.

Avantageusement, la requête REQ' est envoyée dans le réseau local RL de façon asynchrone, grâce à la fonctionnalité XMLHttpRequest dont est dotée l'application web APR. Une telle requête contient en outre, comme mentionné plus haut dans la description, les données d'identification relatives au service Web proposé.

Dans l'exemple représenté, la requête REQ' s'écrit :

```
 {
 "action": "find web service",
 "serviceName": "Set-Top-Box Management"
 }
```

Au cours d'une étape E7, la requête REQ' est reçue par les teerminaux TD1, TD2 et TD4.

Au cours d'une étape E8, le module de traitement de chacun des terminaux TD1, TD2 et TD4 effectue une comparaison des données d'identification reçues dans la requête REQ' avec les données d'identification relatives au/aux service(s) Web susceptible(s) d'être proposé(s) par chacun desdits terminaux et stockées dans leur mémoire vive correspondante. Dans l'exemple représenté, le résultat positif à l'issue de cette comparaison est obtenu dans le terminal TD2.

Au cours d'une étape E9, le module de traitement TR2 du terminal TD2 extrait de la mémoire vive MV2 le chemin de navigation de la page Web du terminal TD2 offrant le service Web et commande l'interface de communication IC2 pour que cette dernière envoie en réponse au terminal TD3 une réponse REP' contenant ledit chemin.

Dans l'exemple représenté, une telle reponse REP' s'écrit

```
 {
 « service name » : « Set-Top-Box Management »,
 "version": "4.0.1",
 "URL": "http://192.168.1.2:8080/index.htm"
 }
```

, où http://192.168.1.2:8080/index.htm représente plus spécifiquement le chemin de navigation précité, « 192.168.1.2 » étant l'adresse IP du terminal TD2 dans le réseau local RL et « 8080 » étant le numéro de port du terminal TD2.

Selon une variante possible, la réponse REP' contient en outre des données complémentaires sur le service Web proposé, telles que par exemple son nom, sa version, etc.... Ces données complémentaires sont par exemple au format JSON.

Au cours d'une étape E10, le navigateur NAV du terminal TD3 reçoit ladite réponse REP'.

Au cours d'une étape E11, le module de traitement TR3 commande alors le navigateur NAV du terminal TD3 pour qu'il emprunte le chemin de navigation contenue dans la réponse REP'. Une telle opération est effectuée automatiquement, ce qui la rend complètement transparente pour l'utilisateur du terminal TD3.

Au cours d'une étape E12, le terminal TD3 accède alors à la page Web associée au service Web proposé par le terminal TD2 et contenue dans ce dernier. L'utilisateur du terminal TD3 peut alors commander à distance le terminal TD2.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé de découverte d'un service Web proposé par un premier terminal (TD2) situé dans un réseau local (RL), à partir d'un second terminal (TD3) situé dans ledit réseau local et comprenant des moyens (NAV) de navigation sur ledit réseau local qui sont adaptés pour accéder à un serveur Web (SERV) dédié au premier terminal et connu du second terminal, ledit procédé étant **caractérisé en ce qu'**il comprend les étapes suivantes :
• au niveau des moyens (NAV) de navigation du second terminal :
- chargement, puis exécution (E5) d'une page Web (PW) contenant une application Web (APR) de recherche du service Web à découvrir, suite à l'envoi d'une requête (REQ) d'accès auprès du serveur Web dédié,
- envoi (E6), via le réseau local, à destination du premier terminal et d'autres terminaux (TD1, TD4) susceptibles d'être présents dans le réseau local, d'une requête (REQ') contenant des données d'identification du service Web à découvrir,
• au niveau du premier terminal (TD2):
- réception (E7) de ladite requête,
- détermination (E8) de la correspondance entre les données d'identification du service Web contenues dans la requête reçue et des données d'identification dudit service Web proposé,
- envoi (E9) au second terminal d'une réponse (REP') à la requête reçue, ladite réponse comprenant au moins une adresse de connexion au service Web proposé,
• à nouveau au niveau des moyens (NAV) de navigation du second terminal :
- réception (E10) de la réponse à ladite requête,
- redirection (E11) à l'adresse de connexion contenue dans la réponse reçue.

2. Procédé selon la revendication 1, selon lequel ladite application Web (APR) est dans un langage interprétable par les moyens de navigation du second terminal.

3. Procédé selon la revendication 2, selon lequel le langage de l'application Web est du type JavaScript.

4. Procédé selon l'une quelconque des revendications 1 à 3, selon lequel l'application Web (APR) contient une plage d'adresses IP associées respectivement au premier terminal (TD2) et aux autres terminaux du réseau local.

5. Procédé selon la revendication 1, selon lequel l'étape d'envoi (E6) à destination du premier terminal et des autres terminaux est effectuée de façon asynchrone.

6. Procédé selon la revendication 1, selon lequel ladite réponse (REP') contenant l'adresse de connexion au service Web proposé comprend en outre des informations complémentaires sur le service Web proposé.

7. Système de découverte d'un service Web, comprenant :
- un premier terminal (TD2) situé dans un réseau local (RL) et apte à proposer ledit service Web,
- un second terminal (TD3) apte à requérir le service Web proposé auprès du premier terminal, le second terminal étant situé dans ledit réseau local et comprenant des moyens (NAV) de navigation sur ledit réseau local qui sont adaptés pour accéder à un serveur Web (SERV) dédié au premier terminal et connu du second terminal, ledit système étant **caractérisé en ce que** :
• les moyens de navigation (NAV) du second terminal sont adaptés pour :
- charger une page Web (PW) contenant une application Web (APR) de recherche du service Web à découvrir, en réponse à une requête d'accès auprès du serveur Web dédié,
- exécuter ladite application Web,
- envoyer, via le réseau local, à destination du premier terminal (TD2) et d'autres terminaux (TD1, TD4) susceptibles d'être présents dans le réseau local, une requête contenant des données d'identification du service Web à découvrir,
• **en ce que** le premier terminal (TD2) comprend :
- des moyens (IC) de réception de ladite requête envoyée,
- des moyens (TR2) de détermination de la correspondance entre les données d'identification du service Web contenues dans la requête reçue et des données d'identification du service Web proposé,
- des moyens (IC) d'envoi au second terminal d'une réponse à la requête reçue, ladite réponse comprenant au moins une adresse de connexion au service Web proposé,
• lesdits moyens de navigation (NAV) du second terminal (TD3) étant en outre adaptés pour :
- recevoir ladite réponse envoyée,
- se rediriger à l'adresse de connexion contenue dans la réponse reçue.

8. Serveur Web (SERV) dédié à un terminal (TD2) qui est situé dans un réseau local (RL) et qui est apte à proposer un service Web à un terminal requérant (TD3) situé dans ledit réseau local et comprenant des moyens (NAV) de navigation sur ledit réseau local qui sont adaptés pour accéder audit serveur Web dédié, ledit serveur (SERV) comprenant des moyens (ICV) d'envoi d'une page Web (PW) au terminal requérant, en réponse à une requête d'accès par les moyens de navigation de ce dernier auprès dudit serveur, ledit serveur étant **caractérisé en ce que** la page Web envoyée contient une application Web (APR) de recherche du service Web à découvrir, ladite application Web étant destinée à être exécutée par les moyens de navigation du terminal requérant afin d'envoyer, via le réseau local, à destination du terminal (TD2) proposant le service Web et d'autres terminaux (TD1, TD4) susceptibles d'être présents dans le réseau local, une requête (REQ') contenant des données d'identification du service Web à découvrir.

9. Serveur selon la revendication 8, dans lequel ladite application Web (APR) est dans un langage interprétable par les moyens de navigation du terminal requérant le service Web.

10. Serveur selon la revendication 9, dans lequel le langage de l'application Web est du type JavaScript.

11. Serveur selon l'une quelconque des revendications 8 à 10, dans lequel l'application Web (APR) contient une plage d'adresses IP associées respectivement au terminal (TD3) requérant le service Web et aux autres terminaux du réseau local.

12. Terminal (TD3) situé dans un réseau local (RL) et apte à requérir un service Web proposé par un autre terminal (TD2) situé dans ledit réseau local, le terminal requérant comprenant des moyens (NAV) de navigation sur ledit réseau local qui sont adaptés pour accéder à un serveur Web (SERV) dédié à l'autre terminal et connu du terminal requérant, le terminal requérant étant **caractérisé en ce que** les moyens de navigation (NAV) de ce dernier sont adaptés pour :
- charger une page Web (PW) contenant une application Web (APR) de recherche du service Web à découvrir, en réponse à une requête d'accès (REQ) auprès du serveur Web dédié,
- exécuter ladite application Web,
- envoyer, via le réseau local, à destination du terminal proposant le service Web et d'autres terminaux susceptibles d'être présents dans le réseau local, une requête (REQ') contenant des données d'identification du service Web à découvrir,
- recevoir, en provenance du terminal (TD2) proposant le service Web et ayant déterminé la correspondance entre les données d'identification du service Web contenues dans la requête envoyée et des données d'identification du service Web proposé, une réponse (REP') comprenant au moins une adresse de connexion au service Web proposé,
- se rediriger à l'adresse de connexion contenue dans la réponse reçue.

13. Terminal (TD2) situé dans un réseau local (RL) et apte à proposer un service Web à un terminal requérant (TD3) situé dans ledit réseau local et comprenant des moyens de navigation sur ledit réseau local, le terminal proposant le service Web ayant un serveur Web (SERV) dédié qui est connu du terminal requérant et qui est accessible par les moyens de navigation de ce dernier, ledit terminal proposant le service Web étant **caractérisé en ce qu'**il comprend :
- des moyens (IC2) de réception, en provenance du terminal requérant, d'une requête (REQ') contenant des données d'identification du service Web à découvrir qui ont été obtenues après exécution, par les moyens de navigation du terminal requérant, d'une application Web de recherche du service Web à découvrir qui a été extraite préalablement d'une page Web chargée par lesdits moyens de navigation en réponse à une requête d'accès par ces derniers auprès du serveur Web dédié,
- des moyens (IC2) d'envoi au terminal requérant d'une réponse (REP') à la requête reçue, ladite réponse comprenant au moins une adresse de connexion au service Web proposé.

14. Programme d'ordinateur comportant des instructions pour l'exécution des étapes du procédé de découverte d'un service Web selon l'une quelconque des revendications 1 à 6, lorsque ledit programme est exécuté par un ordinateur.

15. Support d'enregistrement lisible par un ordinateur sur lequel est enregistré un programme d'ordinateur comprenant des instructions pour l'exécution des étapes du procédé de découverte d'un service Web selon l'une quelconque des revendications 1 à 6, lorsque ledit programme est exécuté par un ordinateur.
